# EUROPÄISCHE PATENTANMELDUNG

(11) **EP 2 016 816 A2**
(43) Veröffentlichungstag der Anmeldung: **21.01.2009**
(21) Anmeldenummer: 08008075.7
(22) Anmeldetag: 26.04.2008
(51) Int. Cl.: A01B 49/06

(54) **Einklappbare Bestellkombination**

(30) Priorität: 05.06.2007 DE 102007026468
(71) Anmelder: Lemken GmbH & Co. KG, 46519 Alpen (DE)
(72) Erfinder: Gebbeken, Martin, 46519 Alpen (DE); Werries, Dieter, 46519 Alpen (DE); Paessens, Christian, 47475 Kamp-Lintfort (DE); Siebers, Josef, 46509 Xanten (DE); Lukas, Thomas, 48683 Ahaus-Wüllen (DE)
(74) Vertreter: Schulte, Jens Michael

(57) **Zusammenfassung**

Die Erfindung betrifft eine einklappbare Bestellkombination mit Saatgutbehälter und Reifenpackerwalze als Fahrwerk, bei der der Saatgutbehälter verschwenkbar oder verschiebbar ausgebildet ist, um zum einen ein Einklappen der Reifenpackerwalze zu ermöglichen und zum anderen eine Veränderung der Gewichtsbelastung auf die Reifenpackerwalze bewerkstelligen zu können.

## Beschreibung

Die Erfindung betrifft eine einklappbare Bestellkombination gemäß dem Oberbegriff des Patentanspruches 1.

Aufgabe der Erfindung ist es, eine einklappbare Bestellkombination zu schaffen, die eine Reifenpackerwalze mit Rädern mit großem Durchmesser aufweist, die in Transportstellung eine schmale Transportbreite aufweist, die aber in Arbeitstellung eine optimale Belastung und Gewichtsverteilung auf die Reifenpackerwalze selbst, aber auch auf die sonstigen Werkzeuge und Einrichtungen zulassend ausgebildet ist.

Diese Aufgabe wird erfindungsgemäß durch die Merkmale des Patentanspruches 1 gelöst.

Dadurch dass die Position des Saatgutbehälters über eine Verstelleinrichtung verlagert wird, kann auch eine einklappbare Bestellkombination mit breitem Saatgutbehälter und Reifenpackerwalze mit großen Rädern kompakt gebaut, problemlos transportiert und optimal auf dem Acker eingesetzt werden.

Die Erfindung sieht weiter vor, dass der Saatgutbehälter vorzugsweise in Arbeitsrichtung hin und her verstellbar ausgebildet ist.

Die Verstellbarkeit des Saatgutbehälters in Arbeitsrichtung stellt einen einfachen Freiraumgewinn für die eingeklappten äußeren Teilsegmente der Reifenpackerwalze dar, insbesondere dann, wenn der Saatgutbehälter nach vorne geschwenkt bzw. nach vorne verschoben wurde. Umgekehrt wird die Gewichtsbelastung auf die Reifenpackerwalze verändert, wenn der Saatgutbehälter in Arbeitsrichtung nach vorne oder hinten bewegt wird.

Die Erfindung sieht weiter vor, dass die Verschwenkeinrichtung so ausgebildet ist, dass der Saatgutbehälter in eine vordere Transportstellung, in eine hintere Arbeitsstellung und/oder in Zwischenstellungen verschwenkbar ist.

Je nach Arbeitssituation besteht so die Möglichkeit, wie zuvor schon erwähnt, für die Transportfahrt den Saatgutbehälter nach vorne zu schwenken oder zu schieben, so dass trotz breitem Saatgutbehälter und großer Räder eine kompakte Transportstellung erreichbar ist. Umgekehrt kann zur optimalen Belastung der Reifenpackerwalze oder der Säschiene usw. der Saatkasten in eine optimale Lage verschoben oder verschwenkt werden, auch abhängig vom Füllstand des Befüllgutes oder der Befüllgüter wie Saatgut und/oder Dünger.

In Hinblick auf die unterschiedlichen Positionen des Saatgutbehälters ist vorgesehen, dass die Verstelleinrichtung als Verschwenkeinrichtung ausgebildet ist.

Das Verstellen des Saatgutbehälters zwischen den Grundpositionen in der Arbeits- bzw. der Transportstellung und etwaigen Zwischenstellungen erfolgt dabei über eine Verschwenkeinrichtung. Diese weist Lenker auf, die über Hydraulikzylinder verschwenkt werden.

Alternativ oder auch ergänzend zu der Lösung mit einem verschwenkbar gelagerten Saatgutbehälter ist vorgesehen, dass die Verstelleinrichtung als Verfahreinrichtung ausgebildet ist.

Die Erfindung sieht weiter eine Vorrichtung vor, die die Gewichtsbelastung auf die Reifenpackerwalze messend und gleich bleibend regelnd ausgebildet ist, und zwar derart, dass in Abhängigkeit vom Gewicht des Füllgutes im Saatgutbehälter der Saatgutbehälter in Arbeitsrichtung mehr oder weniger nach hinten oder nach vorne verschoben bzw. verschwenkt wird.

Durch diese Möglichkeit wird der Saatgutbehälter während der Arbeit so verschwenkt oder verschoben, dass eine gleich bleibende Rückverfestigung durch die Reifenpackerwalze erzielt wird. Bei vollem Saatgutbehälter befindet sich dieser in einer vorderen Position; er wird mehr und mehr nach hinten in Richtung Reifenpackerwalze bewegt, wenn sich der Füllstand des Füllgutes oder der Füllgüter im Saatgutbehälter reduziert. Dabei ist denkbar, dass sich der Schwerpunkt des leeren Saatgutbehälters sogar hinter der Achse oder den Achsen der Reifenpackerwalze bewegen lässt.

Die Erfindung sieht weiter vor, dass die äußeren Teilsegmente der Reifenpackerwalze jeweils über Querachsen mit dem mittleren Teilsegment verbunden sind und über Hydraulikzylinder geregelt in Arbeitstellung gehalten werden, wobei der spezifische Bodendruck der äußeren Teilbreiten so geregelt wird, dass er abhängig vom Gewicht des Füllgutes im Saatgutbehälter konstant mit dem spezifischen Bodendruck des mittleren Teilsegmentes ist.

Durch diese Maßnahme wird unter anderem sichergestellt, dass die Belastung der einzelnen Räder der Reifenpackerwalze in Abhängigkeit von den Bodenkonturen und damit die Rückverfestigung des Bodens über die gesamte Arbeitsbreite konstant bleibt.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Seitenansicht der Bestellkombination mit nach vorne verschwenktem Saatgutbehälter und
- Figur 2: eine Seitenansicht der Bestellkombination mit nach hinten verschwenktem Saatgutbehälter.

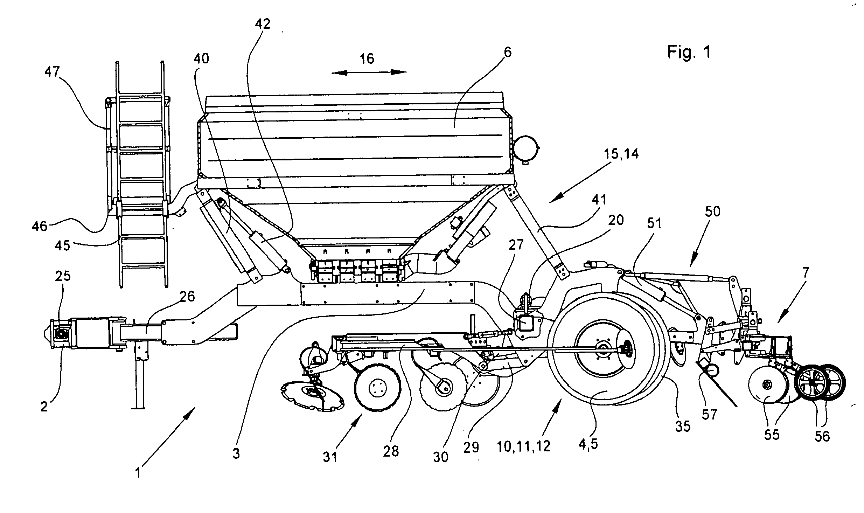

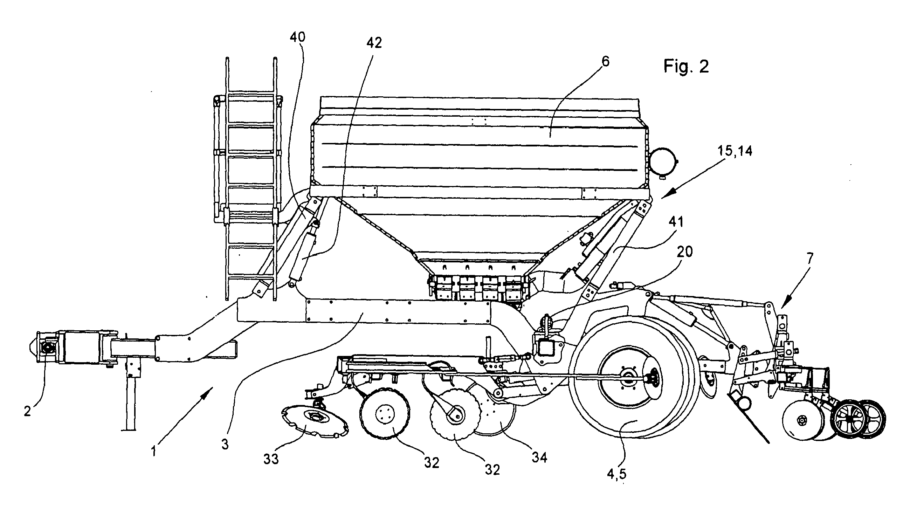

Figur 1 zeigt eine Seitenansicht der Bestellkombination 1 mit nach vorne verschwenktem Saatgutbehälter 6. Die Bestellkombination weist vorne eine Zugeinrichtung 2 auf, die als Zugöse für die Verbindung mit dem Zugpendel oder der Anhängerkupplung eines Zugfahrzeuges oder wie hier als Querachse 25 für die Verbindung mit den Unterlenkern der Dreipunkthydraulik eines Zugfahrzeuges ausgebildet sein kann. Die Zugeinrichtung 2 ist über die längsverstellbare Starrdeichsel 26 mit dem Tragrahmen 3 verbunden. Endseitig des Tragrahmens 3 befindet sich ein Querrahmen 27, an dem sowohl die Reifenpackerwalze 4 als auch die Gerätefelder 28 angeordnet sind. Über das Hubsystem 29 mit Hydraulikzylinder 30 können die Gerätefelder 28, die mit Bodenbearbeitungswerkzeugen 31 ausgerüstet sind, eingestellt und auch für die Kehrfahrt auf dem Vorgewende oder einer Transportfahrt ausgehoben werden. Als Bodenbearbeitungswerkzeuge 31 sind hier Hohlscheiben 32, Einebnungsscheiben 33 und Begrenzungsscheiben 34 vorgesehen. Dies ist insbesondere Figur 2 zu entnehmen. Da die Höhe der Gerätefelder 28 mit den daran befestigten Bodenbearbeitungswerkzeugen 31 sehr niedrig ist, können sie in eingeklappter Transportstellung problemlos neben dem Saatgutbehälter 6 platziert werden. Aufgrund der großen Räder 35 der Reifenpackerwalze 4 musste hier durch Verschwenken des Saatgutbehälters 6 nach vorne der erforderliche Freiraum geschaffen werden.

Ein Verstellen des Saatgutbehälters 6 erfolgt über die hier als Verschwenkeinrichtung 15 ausgebildete Vestelleinrichtung 14. Die Verschwenkeinrichtung 15 weist Lenker 40 und 41 auf, die über Hydraulikzylinder 42 verschwenkt werden. Der für Wartungsarbeiten erforderliche Aufstieg 45 mit Podest 46 und Geländer 47 ist mit dem verschwenkbaren Saatgutbehälter 6 fest verbunden und ermöglicht dadurch in jeder Schwenkstellung des Saatgutbehälters 6 einen sicheren Zugang zum Saatgutbehälter 6.

Hinter der Reifenpackerwalze, die mit pneumatischen Reifen, Vollgummireifen, aber auch mit anderen ringförmigen Werkzeugen, die als Fahrwerk 5 geeignet sind, ausgerüstet sein kann, befindet sich die Säschiene 7, die über das Gestänge 50 mit Hydraulikzylinder 51 aushebbar bzw. einstellbar ausgebildet ist. Die Säschiene 7 ist ebenfalls einklappbar und weist hier Doppelscheibenschare 55 mit Tiefenführungsrollen 56 auf. Vor der Säschiene 7 und hinter der Reifenpackerwalze 4 befindet sich ein Egalisierungswerkzeug 57.

Figur 2 zeigt die Bestellkombination 1 mit nach hinten geschwenktem Saatgutbehälter 6. Je nach Art der Schwenkeinrichtung 15 kann der Saatgutbehälter 6 mit seinem Schwerpunkt mehr oder weniger weit nach hinten verschwenkt werden. Der Hydraulikzylinder 42 der Verschwenkeinrichtung 15 wird über eine Regeleinrichtung so gesteuert, dass er den gefüllten Saatgutbehälter 6 in eine vordere Position verschwenkt. Je mehr Befüllgut wie Saatgut und/oder Dünger ausgebracht wird, um so weiter wird der Saatgutbehälter 6 nach hinten verschwenkt, um die Gewichtsbelastung auf die Reifenpackerwalze 4 möglichst konstant zu halten.

Die Hydraulikzylinder 20 für die Einklappung der Reifenpackerwalze 4 und die Druckbelastung der äußeren Teilsegmente 10 und 12 der Reifenpackerwalze werden während der Arbeit bezüglich des Systemdruckes in Abhängigkeit von der spezifischen Druckbelastung der mittleren Teilsegmente 11 bzw. des mittleren Teilsegmentes 11 der Reifenpackerwalze 4 mit Öldruck beaufschlagt, um über die gesamte Arbeitsbreite der Bestellkombination 1 eine gleichmäßige Rückverfestigung des Bodens zu erzielen.

## Patentansprüche

1. Einklappbare Bestellkombination (1) mit einer Zugeinrichtung (2) für die Verbindung der Bestellkombination (1) mit einem Zugfahrzeug, mit einem Tragrahmen (3), mit einer auch als Fahrwerk (5) dienenden Reifenpackerwalze (4), mit einem Saatgutbehälter (6), der sich in Arbeitsstellung oberhalb des Fahrwerks (5) befindet und mit einer hinter dem Fahrwerk (5) angeordneten Säschiene (7),
**dadurch gekennzeichnet,**
**dass** die Reifenpackerwalze (4) aus mehreren Teilsegmenten (10,11,12) besteht und die äußeren Teilsegmente (10,12) der Reifenpackerwalze (4) einklappbar ausgebildet sind, dass der Saatgutbehälter (6) über eine Verstelleinrichtung (14) verfügt, die ein Verstellen der Position des Saatgutbehälters (6) derart ermöglicht, dass sich der Saatgutbehälter (6) in Transportstellung bei eingeklappten äußeren Teilsegmenten (10,12) der Reifenpackerwalze (4) vor den eingeklappten Teilsegmenten (10,12) befindet und in Arbeitsstellung bei ausgeklappten Teilsegmenten (10,12) oberhalb der Reifenpackerwalze (4) bzw. oberhalb und/oder neben den ausgeklappten Teilsegmenten (10,12) angeordnet ist.

2. Einklappbare Bestellkombination nach Anspruch 1,
**dadurch gekennzeichnet,**
**dass** der Saatgutbehälter (6) vorzugsweise in Arbeitsrichtung (16) hin und her verstellbar ausgebildet ist.

3. Einklappbare Bestellkombination nach Anspruch 1 und 2,
**dadurch gekennzeichnet,**
**dass** die Verstelleinrichtung (14) so ausgebildet ist, dass der Saatgutbehälter (6) in eine vordere Transportstellung, in eine hintere Arbeitsstellung und/oder in Zwischenstellungen verstellbar ist.

4. Einklappbare Bestellkombination nach Anspruch 1,
**dadurch gekennzeichnet,**
**dass** die Verstelleinrichtung (14) als Verschwenkeinrichtung (15) ausgebildet ist.

5. Einklappbare Bestellkombination nach Anspruch 1,
**dadurch gekennzeichnet,**
**dass** die Verstelleinrichtung (14) als Verfahreinrichtung ausgebildet ist.

6. Einklappbare Bestellkombination nach Anspruch 1 und 3,
**dadurch gekennzeichnet,**
**dass** eine Vorrichtung vorgesehen ist, die die Gewichtsbelastung auf die Reifenpackerwalze (4) messend und gleich bleibend regelnd ausgebildet ist, und zwar derart, dass in Abhängigkeit vom Gewicht des Füllgutes im Saatgutbehälter (6) der Saatgutbehälter (6) in Arbeitsrichtung mehr oder weniger nach hinten oder nach vorne verschiebbar bzw. verschwenkbar ist.

7. Einklappbare Bestellkombination nach Anspruch 1 und 6,
**dadurch gekennzeichnet,**
**dass** die äußeren Teilsegmente (10,12) der Reifenpackerwalze (4) jeweils über Querachsen mit dem mittleren Teilsegment (11) verbunden sind und über Hydraulikzylinder (20) geregelt in Arbeitsteilung gehalten werden, wobei der spezifische Bodendruck der äußeren Teilbreiten (10,12) so geregelt wird, dass er abhängig vom Gewicht des Füllgutes im Saatgutbehälter konstant mit dem spezifischen Bodendruck des mittleren Teilsegmentes (11) ist.
